# EUROPEAN PATENT SPECIFICATION

(11) **EP 1 829 825 B1**
(45) Date of publication and mention of the grant of the patent: **26.05.2010**
(21) Application number: 06004085.4
(22) Date of filing: 01.03.2006
(51) Int. Cl.: C01G 31/00, C01G 31/02, C01G 29/00, C09C 1/00

(54) **Process for the production of translucent pigments based on cotaed bismuth oxide and bismuth vanadate**
Verfahren zur Herstellung von beschichtetem Bismuthoxid und Bismuthvanadat, welches transparente Pigmente enthält
Procédé de production de pigments translucides à base d'oxyde be bismuth et de vanadate de bismuth revêtis

(43) Date of publication of application: 05.09.2007
(73) Proprietor: Clariant Finance (BVI) Limited, Road Town, Tortola (VG)
(72) Inventor: Metz, Hans Joachim,Dr.,, 64285 Darmstadt (DE); Pratsinis, Sotiris E.,Prof.,, 8032 Zürich (CH); Strobel, Reto, 8008 Zürich (CH)
(74) Representative: Hütter, Klaus

(56) References cited:
- US-A- 5 851 587
- MAEDLER L ET AL: "BISMUTH OXIDE NANOPARTICLES BY FLAME SPRAY PYROLYSIS" JOURNAL OF THE AMERICAN CERAMIC SOCIETY, BLACKWELL PUBLISHING, MALDEN, MA, US, vol. 85, no. 7, July 2002 (2002-07), pages 1713-1718, XP001124011 ISSN: 0002-7820
- L. ZHANG, D. CHEN, X. JIAO: "Monoclinic structured BiVO4 nanosheets: hydrothermal preparation, formation mechanism and coloristic and photocatalytic properties" J. PHYS. CHEM B, vol. 110, 26 January 2006 (2006-01-26), pages 2668-2673, XP002390209
- K. SAYAMA, A. NOMURA, Z. ZOU, R. ABE, Y. ABE, H. ARAKAWA: "Photoelectrochemical decomposition of water on monocrystalline BiVO4 film electrodes under visible light" CHEM. COMMUN., 2003, pages 2908-2909, XP002390210
- L. MÄDLER, H.K. KAMMLER, R.MUELLER, S.E. PRATSINIS: "Controlled synthesis of nanostructured particles by flame spray pyrolysis" AEROSOL SCIENCE, vol. 33, 2002, pages 369-389, XP002390211

## Description

Novel, nano-sized inorganic pigments show different coloristic effects compared to the known materials of the same chemical composition. Inorganic pigments are generally more durable and resistant than transparent organic pigments. The desired combination of transparency and durability can be achieved by novel, inorganic, nano-sized mixed metal oxides of the group of bismuth oxides and bismuth vanadates.

It is generally known to use flame processes for the synthesis of metal and metal-oxide nano-particles. In general, flame processes are easily scalable, cost effective and allow the precise control of particle size in the range of 5 to 100 nm [S.E. Pratsinis, Prog. Energy Combust. Sci., 24, 197 (1998)].

Nano-crystalline ceria-zirconia can be prepared in a single step [W.J. Stark, L. Mädler, M. Maciejewski, S.E. Pratsinis, A. Baiker, A. Chem. Commun., 588 (2003)]. Here, ceria-zirconia nano-particles are formed in the gas phase by combustion of precursor liquids and in-situ annealing of the product upon collection. At least two metal precursors are dissolved in a fuel and combusted in a spray flame [L. Mädler, H.K. Kammler, R. Müller, S.E. Pratsinis, J. Aerosol Sci., 33, 369 (2002)] resulting in primary particles smaller than 50 nm in diameter. The products are powders which are recovered by a collection system.

Bismuth vanadate, nominally BiVO₄, is used as a yellow pigment in the ceramic and plastic industries. It can be prepared by heating stoichiometric quantities of Bi and V precursors, but brighter colours are obtained by an aqueous preparation route [P. Wood, F.P. Glasser, Ceram. Int., 30, 875 (2004)].

Additionally, BiVO₄ exhibits a significant photocatalytic activity which makes this material very interesting for application as a functional pigment. However, photocatalytic activity is disadvantageous for many applications, so that there is a desire to deactivate said photocatalytic activity.

The article Maedler et al., J. Amer. Ceramic Soc., Vol. 85, no. 7 (2002-07), pages 1713-1718 discloses Bi₂O₃ nanoparticles having a diameter ranging from 8.5 to 34.6 nm obtained by flame spray pyrolysis method.

US-A-5 851 587 discloses a method to coat bismuth vanadate particles with different inorganic coatings in order to improve their stability.

An objective of the present invention was to find a method to deactivate the photocatalytic activity of bismuth vanadate without impairing its coloristic properties.

It has been found that the bismuth oxide or bismuth vanadate prepared as defined below surprisingly achieves the objective proposed.

The present invention provides a process for preparing a pigment of the formula (I)

BiₓV₍₂₋ₓ)O₍₅₋ₓ₎ (I)

wherein x is a number of 0,1 to 2, characterized by a particle size d_{50,BET} of 10 to 100 nm,
wherein the pigment is coated with a layer selected from the group consisting of silicate, tin oxide and TiO₂,
comprising a flame spray pyrolysis process, wherein a first liquid metal precursor mixture is fed through at least one nozzle where the first liquid precursor mixture is dispersed, ignited and combusted, to give a spray flame, spraying a second liquid precursor solution with or without ignition into said spray flame, collecting said coated pigment on a solid filter, wherein the first liquid metal precursor mixture contains a soluble bismuth compound and optionally a soluble vanadium compound, and wherein the second liquid precursor solution contains a soluble silicon, tin or titanium compound.

Preferably the particle size d_{50,BET} is between 10 and 80 nm, more preferably 10 to 60 nm, especially 10 to 40 nm.

Preferably x is a number of 0.2 to 1.8, especially about 1.

The present invention provides for any crystalline mixed-oxide in the phase space V₂O₅-Bi₂O₃.

In a further embodiment of the present process, a bismuth containing precursor solution and a vanadium containing precursor solution are fed through separate nozzles where either solution is dispersed, ignited and combusted, to give a spray flame, and collecting particles of said pigment preferably on a solid filter.

In spray flame synthesis, a liquid containing the desired metal precursor is sprayed into a flame. Rapid droplet heating results in a precursor release into the gas phase where conversion to the oxides occurs. Condensation results in small primary particles of said particle size. The particles can be collected on a solid filter with the aid of a vacuum pump.

The formation of either amorphous or crystalline (e.g. monoclinic) materials can be controlled by adjusting the temperature and residence time during particle formation and/or collection. The temperature on the filter can be adjusted by varying the distance between the nozzle and the filter. The temperature of the solid filter, e.g. a glass fiber filter, is preferably in the range of 400 to 500°C. However, it is also possible to collect the pigment particles on a solid filter, e.g. a glass fiber filter, having a temperature below 400°C. In this case, the pigment particles condense in an amorphous form which can be annealed in a further process step at a temperature between 400 and 600°C to effect a conversion into a crystalline form.

The particle size can be controlled by the precursor concentration in the solution as well as by the flame conditions (precursor feed rate, dispersion gas flow rate).

The as-prepared crystalline material shows a bright, yellow color.

A typical set-up for flame spray pyrolysis is disclosed in L. Mädler, H.K. Kammler, R. Müller, S.E. Pratsinis, J. Aerosol Sci., 33, 369 (2002). A typical spray apparatus consists of a gas-assisted nozzle that is made from a capillary tube of outer diameter of about 0.8 to 1 mm and an inner diameter of about 0.5 to 0.7 mm that lies in an opening of about 1 to 1.4 mm in diameter creating an annular gap. Precursor and fuel flow through a capillary tube while the dispersion gas passes through the annular gap.The mass flow rate is determined by the gap, according to the applied atomization pressure which is the difference of the nozzle upstream pressure (1.2 to 2 bar) and downstream pressure (typically atmospheric pressure).

Various bismuth and vanadium compounds can be used as precursors, i.e. alkoxides, acetates, nitrates, carbonates, arylates, acetonates, caboxylates, for the conversion into metal oxides and/or metals in the flame spray pyrolysis process. As preferred metal precursor, bismuth(III)-2-ethylhexanoate, bismuth nitrate in nitric acid, or other, organic acids and vanadyl naphthenate, -acetylacetonate or ammonium vanadat in 2-ethanolamines like 2-aminoethanol can be used. The metal precursors are dissolved in combustible liquids, such as mineral spirits, toluene, other liquid hydrocarbons, fatty acids, esters, alcohols, carbonyl compounds, preferably in a concentration of from 0.1 to 1 mol/l, especially from 0.2 to 0.6 mol/l.

The Bi:V ratio in the final product can be adjusted by mixing the metal precursors in the corresponding ratios.

The liquid metal precursor mixture feed rate in the above described flame spray pyrolysis device is preferably between 1 to 10 ml/min, especially between 2 to 8 ml/min. As fuel, C₁-C₈-alkanes, such as methane, ethane, propane, butane or iso-octane, or C₁-C₄-alkanols, such as methanol, ethanol, propanol, 2-butanol, can be used.

As oxidant air or pure oxygen can be used, that serve also as droplet dispersion gases. The dispersion gas flow rate is preferably between 0.1 to 20 l/min, especially between 1 to 10 l/min.

Evaporation and ignition of the spray can be initiated by a smaller flame ring emerging from an annular gap. Most preferably a premixed methane/oxygen gas flows through that ring at a total flow rate of 2 to 8 l/min.

The pigment of the present invention is particularly interesting as a non-toxic, yellow pigment with high performance and durability in metallic paints. For applications, where a photocatalytic activity is not desired, the surface of the particles is deactivated by an inert coating. This is a thin, transparent silica, tin oxide or titanium oxide coating, which is prepared in a second step after particle formation or directly during the flame process by a controlled addition of a silica, tin or titanium precursor downstream the particle formation process. The direct condensation of e.g. SiO₂ from the gas phase on the pigment particles will result in thin SiO₂ coating of the pigment particles. This has several advantages not only concerning the passivation of the photocatalytic activity but also in prevention of the direct agglomeration and consequent growth of the pigment particles.

Preferably, the layer has a thickness of 0.5 to 100 nm, especially 1 to 20 nm.

The precursor of the desired coating material is introduced into the spray flame downstream the particle formation process. This precursor can either be introduced in the form of a vapor or of fine droplets of a precursor containing solution. The Si, Sn or Ti precursor is combusted and SiO₂, tin oxide or titanium oxide condenses on the pigmentary particles forming a silicate, tin oxide or titanium oxide coating.

Said coated pigments can also be prepared by a flame spray pyrolysis process, wherein a precursor for the coating material is added to the metal precursor mixture containing a soluble bismuth compound and optionally a soluble vanadium compound. This precursor mixture containing also the coating material is then sprayed and combusted as described above.

The spray flame pyrolysis process can be performed as described above.

Various silicon, tin or titanium compounds can be used as precursors, i.e. halides, alkoxides, acetates, nitrates, carbonates, arylates, acetonates, caboxylates, for the conversion into metal oxides in the flame spray pyrolysis process. As preferred metal precursor, Si-alkoxides (silicic acid esters), halides, carbosilanes or carbosiloxanes, Sn-alkoxides, carboxylates or halides and Ti-alkoxides or halides can be used. The metal precursors are dissolved in combustible liquids, such as mineral spirits, toluene, other liquid hydrocarbons, fatty acids, esters, alcohols, carbonyl compounds, preferably in a concentration of from 0.1 to 1 mol/l, especially from 0.2 to 0.6 mol/l. The second liquid metal precursor mixture feed rate in the above described flame spray pyrolysis device is preferably between 1 to 10 ml/min, especially between 2 to 8 ml/min. The ratio of the first and the second liquid metal precursor can be determined by the flow rates of the respective metal precursor mixtures which can vary from 0.2 to 5, and by the precursor concentrations.

These methods give access to a simple, one-step preparation method of coated particles, wherein the coating is needed for various reasons: i.e. passivating the pigment surface or tuning of the refractive index of the surrounding media.

The pigment according to the invention can be employed for the pigmenting of high-molecular-weight organic materials of natural or synthetic origin, for example of plastics, resins, surface coatings, paints, especially metallic paints, electrophotographic toners and developers, electret materials, colour filters and of writing and printing inks and seed.

### Examples

Bismuth vanadate and Bi₂O₃ was prepared by flame spray pyrolysis of solutions consisting of bismuth (III) 2-ethylhexanoate (in mineral spirits, 28% Bi, Strem) and vanadyl-naphthenate (in mineral spirits, 3% V, Strem) dissolved in a mixture of toluene and 2-ethylhexanoic acid (1:1 vol). The total metal concentration (Bi + V) in the solution was kept constant at 0.4 mol/l.

The liquid precursor mixture was fed at 5 ml/min in the center of a methane/oxygen flame by a syringe pump (Inotech) and dispersed by oxygen (5 l/min), forming a fine spray. The pressure drop at the capillary tip was kept constant at 1.5 bar by adjusting the orifice gap area at the nozzle. The spray flame was surrounded and ignited by a small flame ring issuing from an annular gap (0.15 mm spacing, at a radius of 6 mm). The total gas flow rate through this premixed methane/oxygen supporting flame ring was 3.5 l/min with a CH₄/ O₂ ratio of 0.92. Product particles were collected on a glass fiber filter (Whatmann GF/D, 25.7 cm in diameter) with the aid of a vacuum pump. The temperature on the filter was adjusted by varying the distance between the nozzle and the filter.

Examples 1, 3, 4, 5 and 6 were prepared with a short nozzle to filter distance (50 cm) resulting in high filter temperatures. For these materials the maximum filter temperature was around 400 °C, resulting in crystallization and sintering of the particles on the filter. Example 2 was prepared with larger nozzle to filter distance (65 cm) and lower maximum filter temperatures (ca. 250 °C). This prevented sintering of Bi₂O₃ on the filter and resulted in smaller particles with larger specific surface area.

For Example 6 two spray nozzles were used both operating with a liquid precursor feed rate of 5 ml/min and oxygen dispersion gas flow rate of 5 L/min. A vanadium containing precursor solution was fed in one and a Bi precursor solution in the other nozzle. Bi(NO₃)₃ was dissolved in a 1:1 mixture of acetic acid and 2-ethylhexanoic acid (0.25 M Bi). Ammonium vanadate (NH₄VO₃) was dissolved in a 1:2 mixture of ethanolamine and ethanol (0.25 M V). The two nozzles were placed such that a mixing of the two flames occurred 3 cm above the nozzle tip.

Example 7 shows the formation of BiVO₄ particles coated with SiO₂ in one-step by flame spray pyrolysis. A SiO₂ precursor (tetra-ethoxysilane) was added to the BiN containing precursor solution, as prepared according to example 3. The Si precursor concentration in the solution was adjusted for 30 wt% SiO₂ in the final BiVO₄ powder. The SiO₂/BiVO₄ powder was prepared with the same flame conditions as example 3.

In the Examples, abbreviations have the following meanings:
Average primary particle diameter (d_{50,BET}) was derived from BET-measurements assuming spherical particles. The BET-equivalent particle diameter is derived as follows: d_{50,BET} = 6/(SSA*ρ) where SSA is the specific surface area of the material and ρ its density (e.g. 6.95 g/cm³ for clinobisvanite).
XRD means X-ray diffraction diagram.

### Example 1: Bi₂O₃ (Reference Example)

The maximum gas temperature at the filter was adjusted to 400°C.
Yield: quantitative
BET: 23m²/g
d_{50,BET}: 27 nm
XRD: beta, tetragonal

### Example 2: Bi₂O₃ (Reference Example)

The maximum gas temperature at the filter was adjusted to 250°C.
The lower filter temperature results in smaller particles with larger BET area.
Yield: quantitative
BET: 66 m²/g
d_{50,BET}: 10 nm
XRD: beta, tetragonal

### Example 3: BiVO₄ (Reference Example)

The maximum gas temperature at the filter was adjusted to 400°C.
Ratio Bi: V = 1 : 1 in the liquid precursor feed;
Yield: quantitative
BET: 15m²/g
d_{50,BET}: 57 nm
XRD: monoclinic, clinobisvanite (BiVO₄)

### Example 4: Bi-V-oxides (Reference Example)

The maximum gas temperature at the filter was adjusted to 400°C. Feed adjusted to produce vanadium depleted phases. Ratio Bi : V = 11 : 9.
Yield: quantitative
BET: 23 m²/g
d_{50,BET}: 36 nm
XRD: clinobisvanite (BiVO₄) and crystalline Bi_{0.6} V_{0.4} O_{1.9} (gamma- Bi₄V₂O₁₁)

### Example 5: Bi-V-Oxides (Reference Example)

The maximum gas temperature at the filter was adjusted to 400°C.
Feed adjusted to produce vanadium depleted phases. Bi : V = 3 : 2.
Yield: quantitative
BET: 28 m²/g
d_{50,BET}: 28 nm
XRD: crystalline Bi_{0.6} V_{0.4} O_{1.9} (gamma-Bi₄V₂O₁₁).

### Example 6: Bi-V-Oxides (Reference Example)

The maximum gas temperature at the filter was 330°C. Yield: quantitative
BET: 27 m²/g
d_{50,BET}: 32 nm
XRD: mainly clinobisvanite (BiVO₄) with traces of amorphous V₂O₅ and crystalline Bi_{0.6}
V_{0.4} O_{1.9} (gamma-Bi₄V₂O₁₁).

### Example 7: SiO₂/BiVO₄

The maximum gas temperature at the filter was 400°C.
Yield: quantitative
TEM: BiVO₄ crystallites (clinobisvanite) embedded in an amorphous SiO₂ matrix are formed.
BET: 55 m²/g
XRD: The BiVO₄ (clinobisvanite) particle diameter as derived from XRD analysis was 23 nm, which did not increase upon calcination at 400°C for 2h.

## Claims

1. Process for preparing a pigment of the formula (I)
BiₓV(₂₋ₓ)O(₅₋ₓ) (I)
wherein x is a number of 0,1 to 2, **characterized by** a particle size d_{50,BET} of 10 to 100 nm,
wherein the pigment is coated with a layer selected from the group consisting of silicate, tin oxide and TiO₂, comprising a flame spray pyrolysis process, wherein a first liquid metal precursor mixture is fed through at least one nozzle where the first liquid precursor mixture is dispersed, ignited and combusted, to give a spray flame, spraying a second liquid precursor solution with or without ignition into said spray flame, collecting said coated pigment on a solid filter, wherein the first liquid metal precursor mixture contains a soluble bismuth compound and optionally a soluble vanadium compound, and wherein the second liquid precursor solution contains a soluble silicon, tin or titanium compound.

2. The process according to claim 1, wherein the particle size d_{50,BET} is between 10 and 40 nm.

3. The process according to claim 1 or 2, wherein x is a number of 0.2 to 1.8.

4. The process according to claim 1, wherein the layer has a thickness of 0.5 to 100 nm.

## Patentansprüche

1. Verfahren zur Herstellung eines Pigments entsprechend der Formel (I)
BiₓV₍₂₋ₓ₎O₍₅₋ₓ₎ (I)
wobei x eine Zahl von 0,1 bis 2 bedeutet, **gekennzeichnet durch** eine Teilchengröße d_{50,BET} von 10 bis 100 nm,
wobei das Pigment mit einer Schicht aus der Reihe Silikat, Zinnoxid und TiO₂ belegt wird,
umfassend ein Flammsprühpyrolyseverfahren, wobei man eine erste flüssige Metallvorgängermischung über mindestens eine Düse führt, in der die erste flüssige Vorgängermischung dispergiert, entzündet und verbrannt wird, wobei man eine Sprühflamme erhält, in diese Sprühflamme eine zweite flüssige Vorgängerlösung gegebenenfalls unter Entzündung einsprüht, das belegte Pigment auf einem Festfilter sammelt, wobei die erste flüssige Metallvorgängermischung eine lösliche Bismutverbindung und gegebenenfalls eine lösliche Vanadiumverbindung enthält und wobei die zweite flüssige Vorgängerlösung eine lösliche Silicium-, Zinn- oder Titanverbindung enthält.

2. Verfahren nach Anspruch 1, bei dem die Teilchengröße d_{50,BET} zwischen 10 und 40 nm liegt.

3. Verfahren nach Anspruch 1 oder 2, bei dem x eine Zahl von 0,2 bis 1,8 bedeutet.

4. Verfahren nach Anspruch 1, bei dem die Schicht über eine Dicke von 0,5 bis 100 nm verfügt.

## Revendications

1. Procédé pour préparer un pigment de formule (I)
BiₓV₍₂₋ₓ₎O₍₅₋ₓ₎ (I)
dans laquelle x est un nombre de 0, 1 à 2, **caractérisé par** une taille de particule d_{50,BET} de 10 à 100 nm,
où le pigment est revêtu avec une couche choisie dans le groupe constitué de silicate, d'oxyde d'étain et de TiO₂,
comprenant un procédé de pyrolyse par pulvérisation à la flamme, dans lequel un premier mélange de précurseur de métal liquide est alimenté par l'intermédiaire d'au moins une buse où le premier mélange de précurseur liquide est dispersé, allumé et consumé, pour obtenir une flamme de pulvérisation, la pulvérisation d'une deuxième solution de précurseur liquide avec ou sans allumage dans ladite flamme de pulvérisation, la collecte dudit pigment revêtu sur un filtre solide, où le premier précurseur de métal liquide contient un composé soluble de bismuth et éventuellement un composé soluble de vanadium, et où la deuxième solution de précurseur liquide contient un composé soluble de silicium, d'étain ou de titane.

2. Procédé selon la revendication 1, **caractérisé en ce que** la taille de particule d_{50,BET} est comprise entre 10 et 40 nm.

3. Procédé selon la revendication 1 ou 2, **caractérisé en ce que** x est un nombre de 0,2 à 1,8.

4. Procédé selon la revendication 1, **caractérisé en ce que** la couche a une épaisseur de 0,5 à 100 nm.
